Europäisches Patentamt

European Patent Office

Office européen des brevets

(11) Publication number: **0 254 096**

**A2**

## EUROPEAN PATENT APPLICATION

(21) Application number: **87109525.3**

(22) Date of filing: **02.07.87**

(51) Int. Cl.⁴: **G21C 3/34**

The title of the invention has been amended (Guidelines for Examination in the EPO, A-III, 7.3).

(30) Priority: **22.07.86 US 888294**

(43) Date of publication of application:
**27.01.88 Bulletin 88/04**

(84) Designated Contracting States:
**DE ES IT SE**

(71) Applicant: **WESTINGHOUSE ELECTRIC CORPORATION**
**Westinghouse Building Gateway Center**
**Pittsburgh Pennsylvania 15222(US)**

(72) Inventor: **Taleyarkhan, Rusi Pesi**
**21-G Murray Court**
**Pittsburgh Pennsylvania 15 239(US)**

(74) Representative: **Patentanwälte Dipl.-Ing. R. Holzer Dipl.-Ing. (FH) W. Gallo**
**Philippine-Welser-Strasse 14**
**D-8900 Augsburg(DE)**

(54) **Boiling water reactor fuel assembly having axially positioned fuel rod spacers.**

(57) The invention relates generally to a fuel assembly having a bundle of fuel rods (42) disposed in a coolant/moderator fluid flow channel defined by walls (20, 34) of elongate flow channel structure (12, 26), and relates in particular to positioning means (54) for disposing fuel-rod spacer grids (50) associated with the fuel-rod bundle in desired axial positions along the latter.

The positioning means (54) are yieldingly resilient, arcuate leaf springs interposed between the respective spacer grid (50) and the fluid-flow-path defining walls (20, 34) so as to exert thereon a lateral force sufficient to maintain the spacer grid in its desired axial position. The arcuate leaf springs (54) extend in the longitudinal direction of the fuel-rod bundle, and each preferably has one end thereof attached to the peripheral strap (56) of the associated spacer grid and has its opposite end free.

FIG. 8

# BWR FUEL ASSEMBLY HAVING AXIALLY POSITIONED FUEL ROD SPACERS

The present invention relates generally to fuel assemblies for a nuclear reactor and, more particularly, to a boiling-water-reactor (BWR) fuel assembly having axially positioned fuel rod spacers.

Typically, large amounts of energy are released through nuclear fission in a nuclear reactor and dissipated as heat in the elongate fuel elements or rods of the reactor. The heat is commonly removed by passing a coolant in heat exchange relation to the fuel rods, the heat then being extracted from the coolant to perform useful work.

In a typical boiling-water-reactor (BWR) fuel assembly, a bundle of fuel rods is subdivided into four separate mini-bundles by a central water cross, and the fuel rods of each mini-bundle are supported in laterally spaced relationship with one another by several, e.g. six axially displaced grids commonly called spacers. All four fuel rod mini-bundles of the fuel assembly are encircled by an outer tubular coolant-flow channel which has a generally rectangular cross-section and extends longitudinally substantially for the entire length of the fuel assembly, interconnecting a top nozzle and a bottom nozzle thereof. The bottom nozzle fits into the reactor core support plate and serves as an inlet for coolant flow into the outer flow channel of the fuel assembly, all as illustrated and described in U.S. Patent No. 4,560,532, for example.

A BWR consists of several hundred fuel bundles each enclosed in its own outer tubular channel and, as mentioned above, consisting of four mini-bundles each including several axially spaced spacer grids which are needed to maintain the desired fuel-rod mini-bundle configuration and to prevent excessive fuel rod bow and flow-induced vibration.

In the above-mentioned U.S. Patent No. 5,560,532, the spacer grids are shown maintained in their respective axial positions by pairs of tabs provided below and above each spacer on special fuel rods (called spacer capture rods) for the purpose of preventing axial dislocation of the spacers. Each tab is at least as wide (2-3 mm.) as each of the dimples provided, as well known, within the spacer to laterally support the fuel rods; thus, these tabs strip as much cooling-liquid film off the fuel rods as do the dimples holding the fuel rods.

Stripping off the liquid film causes premature dryout and critical heat flux (CHF), and it can, as well known, cause a significant deterioration in the critical power ratio (CPR). Again, this effect causes greatest degradation in CPR margins if the tabs are located flush against the spacer since this compounds the local disturbances in the liquid film on the fuel rods. Furthermore, depending upon the radial variation of rod bundle CHF characteristics, this process could be further enhanced if the tabs are on a rod located in a "limiting" CHF radial location. The CHF phenomenon in BWRs is of paramount importance in characterizing the power rating of the plant. Hence, degradation of this margin should be minimized.

Another arrangement for maintaining the desired axial positions of spacers in BWR fuel assemblies is to employ spacer holder rods which replace some and are arranged in parallel with the remaining fuel rods of the fuel assembly. Such approach is described in U.S. Patents Nos. 3,802,995 and 4,508,679. In U.S. Patent No. 3,802,995, a fuel rod in a central fuel rod position is replaced with a spacer capture water tube having a plurality of radially extending, axially spaced fins or lugs each of which is adapted to engage one of the spacers so as to retain it fixed in its axial position, the spacers in this arrangement being of a construction, such as shown in U.S. Patent No. 3,654,077, wherein each spacer has a peripheral support band and a plurality of sheet-metal divider members and divider wires. In accordance with U.S. Patent No. 4,508,679, lugs on moderator tubes are used for maintaining the desired axial positions of spacers, as in U.S. Patent No. 3,802,995 but with a different construction of spacers, each of the latter having a plurality of ferrules welded together and encompassed by a peripheral band. The band has, near each corner, a pair of inwardly curved projections serving as lead-ins when the outer tubular flow channel is inserted over the fuel assembly. The peripheral band also has a pair of outwardly extending lobes near each corner for providing predetermined spacing between the band and the surrounding coolant flow channel. A particular drawback of these spacer holder water tubes is that they take up space in the fuel assembly which could otherwise be used to receive fuel rods, thus reducing the operating economy of the reactor.

Still another arrangement is to dispose the spacer in interlocking relationship with the outer tubular channel of the fuel assembly. Such arrangement is disclosed in U.S. Patent No. 4,489,038 in which each spacer comprises upper and lower frames spaced apart and interconnected by a resilient wall or strip. A pair of spaced-apart stop projections embossed in the wall of the fuel assembly housing or channel constitutes a first locking means, and a stop member formed in the middle of the strip of the spacer constitutes a second locking means. When a fuel rod is inserted into the spacer cell adjacent to the stop member, it urges the resilient strip toward the fuel assembly channel and thereby urges the stop member from its inactive position to an active position where it is positioned so close to the channel that the spacer cannot be moved upwards or downwards without causing the stop member to abut against one of the projections embossed in the channel. Preferably, the first and second locking means are located at each of the corners of the spacers and tubular channel.

It is the principal object of the invention to provide a BWR fuel assembly having improved spacer retaining means which are less intricate and also do not take up any space intended to be occupied by fuel rods.

Underlying the present invention is the realization that there is a simple way to support the BWR spacers, one which has no effect on CHF or even pressure drop so that removal of the spacer capture tabs on the tie fuel rods is feasible. Specifically, removal of the spacer tabs is compensated for by introducing springs between the exteriors of the spacers and the interior of the outer channel, and also between the spacer exteriors and the exterior of the water-cross. Pressure drop is not affected since the space between the spacer exterior and the channel interior is a dead zone, i.e., a zone with stagnant flow. Essentially the same is true with respect to the space between the spacer exterior and the water-cross exterior. The compressive force exerted by the springs keeps the spacers in a stationary relationship with respect to the channel and water-cross. The springs also give mechanical dampening from structural vibrations so that improved seismic and fretting performance results. The springs are either welded to the spacer exterior walls or clipped on a peripheral edge of the spacers.

Accordingly, the invention relates to a fuel assembly having a plurality of spaced fuel rods, an outer hollow tubular flow channel surrounding the fuel rods so as to direct flow of coolant/moderator fluid therealong, and at least one spacer disposed along the channel and about the fuel rods so as to maintain them in side-by-side spaced relationship. The invention resides in an arrangement for securing the spacer in a desired axial position along the fuel rods, comprising a plurality of yieldably resilient elements disposed between an interior wall portion of the outer channel and an exterior side of the spacer in a manner such as to contact the channel and the spacer and to exert thereon sufficient contacting force to maintain the spacer substantially stationary in the desired axial position along the fuel rods.

More particularly, each of the elements is an arcuate leaf spring extending generally parallel to the axial direction of the fuel rods, and the elements are spaced from one another in a direction generally transverse to said axial direction. In one embodiment, each spring is fixedly attached at one end to the spacer, whereas in another embodiment the spring is clipped onto an edge of the spacer. In each embodiment, an opposite free end of the spring is space outwardly from the spacer.

Preferred embodiments of the invention will now be described, by way of example only, with reference to the accompanying drawings, in which:

Fig. 1 is an elevational view, with parts broken away and sectioned for clarity, of a BWR nuclear fuel assembly employing exterior springs, according to the invention, for maintaining the axial positions of fuel-rod spacers;

Fig. 2 is an enlarged top plan view of the BWR fuel assembly, as seen along line 2--2 of Fig. 1;

Fig. 3 is an enlarged bottom plan view of the BWR fuel assembly, as seen along line 3--3 of Fig. 1;

Fig. 4 is a cross-sectional view of the BWR fuel assembly as taken along line 4--4 of Fig. 1;

Fig. 5 is another cross-sectional view of the BWR fuel assembly similar to Fig. 4 but taken along line 5--5 of Fig. 1;

Fig. 6 is an enlarged top plan view of the upper right-hand spacer of Fig. 4 shown without fuel rods extending therethrough;

Fig. 7 is a side elevational view of the spacer, as seen along line 7--7 of Fig. 6;

Fig. 8 is a schematical representation of fragmentary portions of the water-cross and outer channel together with a spacer held therebetween by spacer positioning springs embodying the invention; and

Figs. 9 to 11 are enlarged fragmentary views of spacers with alternative forms of spacer positioning springs embodying the invention.

In the following description, like reference characters designate like or corresponding parts throughout the several views of the drawings, and terms such as "forward", "rearward", "left", "right", "upwardly", "downwardly", and the like are employed as words of convenience not to be construed as limiting terms.

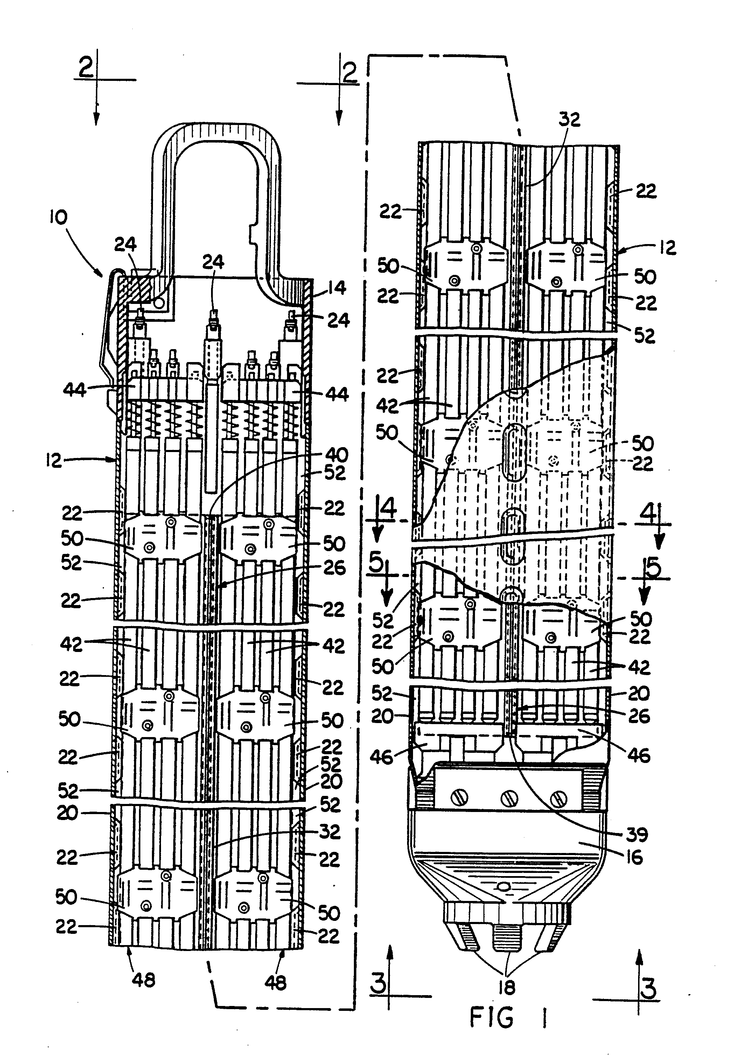

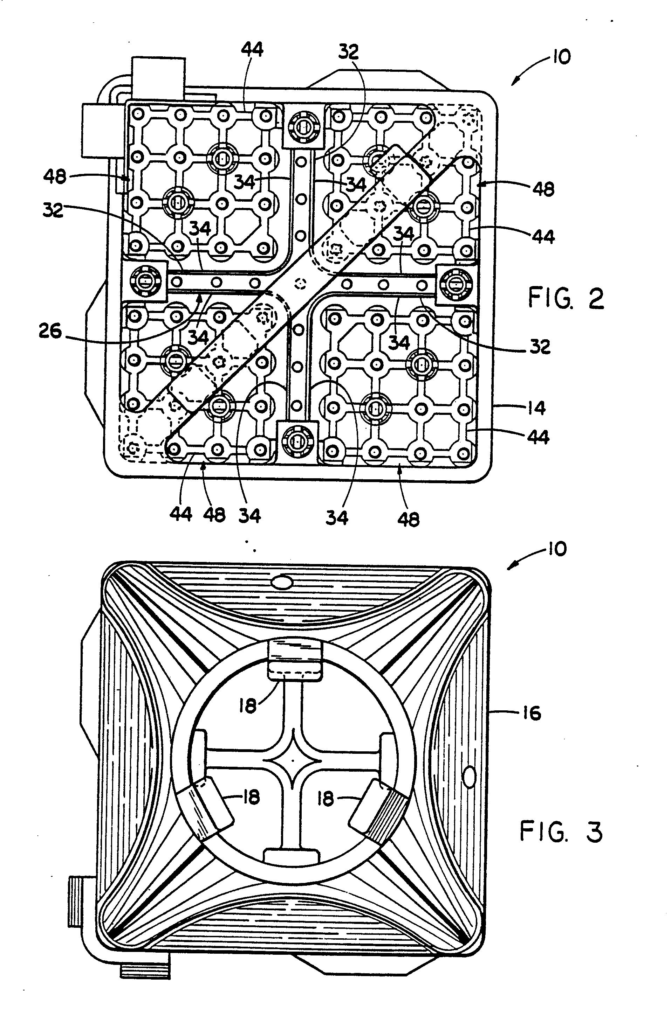

Referring now to the drawings, and particularly to Figs. 1 to 7, the nuclear fuel assembly illustrated therein and generally designated 10 is of a type generally used in boiling water reactors. The fuel assembly 10 includes an elongated outer tubular flow channel 12 which extends substantially over the whole length of the fuel assembly 10 and connects an upper support fixture or top nozzle 14 to a lower base or bottom nozzle 16 thereof. The bottom nozzle 16 which serves as an inlet for coolant flow into the outer channel 12 of the fuel assembly 10 includes legs 18 for guiding the bottom nozzle 16 and the fuel assembly 10 into a reactor core support plate (not shown).

The outer flow channel 12, generally of rectangular cross-section, consists of four interconnected vertical walls 20 each displaced about ninety degrees with respect to those adjacent thereto. Formed in spaced-apart relationship on, and extending in a vertical row centrally along, the inner surface of each wall 20 of the outer flow channel 12 are structural ribs 22. The outer flow channel 12, together with the ribs 22 therein, preferably is formed from a metallic material, such as an alloy of zirconium known as Zircaloy. Above the upper ends of the structural ribs 22, a plurality of upwardly extending attachment studs 24 affixed to the walls 20 of the outer flow channel 12 are used to interconnect the top nozzle 14 to the channel 12.

In order to improve neutron moderation and economy, there is provided a hollow water-cross, generally designated 26, which extends axially through the outer channel 12 to define an open inner channel 28 for subcooled moderator liquid to flow therethrough the fuel assembly 10, and which divides the fuel assembly into four separate, elongate compartments 30. The water-cross 26 has four radial panels 32 composed of four elongate, generally L-shaped interconnected metal angles or sheet members 34 which extend generally for the whole length of the channel 12 and are spaced apart by protuberances in the form of dimples 36 formed in the sheet members 34 of each panel 32 and extending therebetween. The dimples 36 are arranged in pairs contacting each other so as to maintain the facing portions of the sheet members in properly spaced relationship with respect to each other, the pairs of contacting dimples 36 being joined together, such as by welding.

The hollow water-cross 26 is affixed to the angularly displaced walls 20 of the outer channel 12 in order to securely retain it in its desired central position, the longitudinal outer edges 38 of the panels 32 of the water-cross 26 preferably being connected, such as welded, to the structural ribs 22 of the channel 12. The water-cross 26 has a lower flow inlet 39 and an upper flow outlet 40, both of which communicate with the inner channel 28.

Disposed within the channel 12 is a bundle of fuel rods 42 which, in the illustrated embodiment, number sixty-four and form an 8 × 8 array. The fuel rod bundle is, in turn, divided into four fuel-rod mini-bundles by the water-cross 26. The fuel rods 42 of each mini-bundle, there being sixteen in number arrayed 4 × 4, extend in parallel spaced relationship with respect to each other between, and are supported by, an upper tie plate 44 and a lower tie plate 46 which, together with the mini-bundle of fuel rods, form a fuel-rod subassembly 48 within the respective compartment 30 of the channel 12. Several grids or spacers 50 axially spaced along the fuel rods 42 of each fuel-rod subassembly 48 maintain the fuel rods of the latter precisely in their laterally spaced relationship. Coolant-flow paths and cross-flow communication between the fuel rod subassemblies 48 in the respective compartments 30 of the fuel assembly 10 are provided by a plurality of openings 52 defined between the structural ribs 22. Coolant flow through the openings 52 serves to equalize the hydraulic pressure between the four separate compartments 30, thereby minimizing the possibility of thermal hydrodynamic instability between the various fuel rod subassemblies 48.

The BWR fuel assembly 10 as described thus far is known and is as disclosed in U.S. Patent No. 4,560,532 mentioned above.

## SPACER POSITIONING SPRINGS FOR AVOIDING CHF PERFORMANCE DEGRADATION

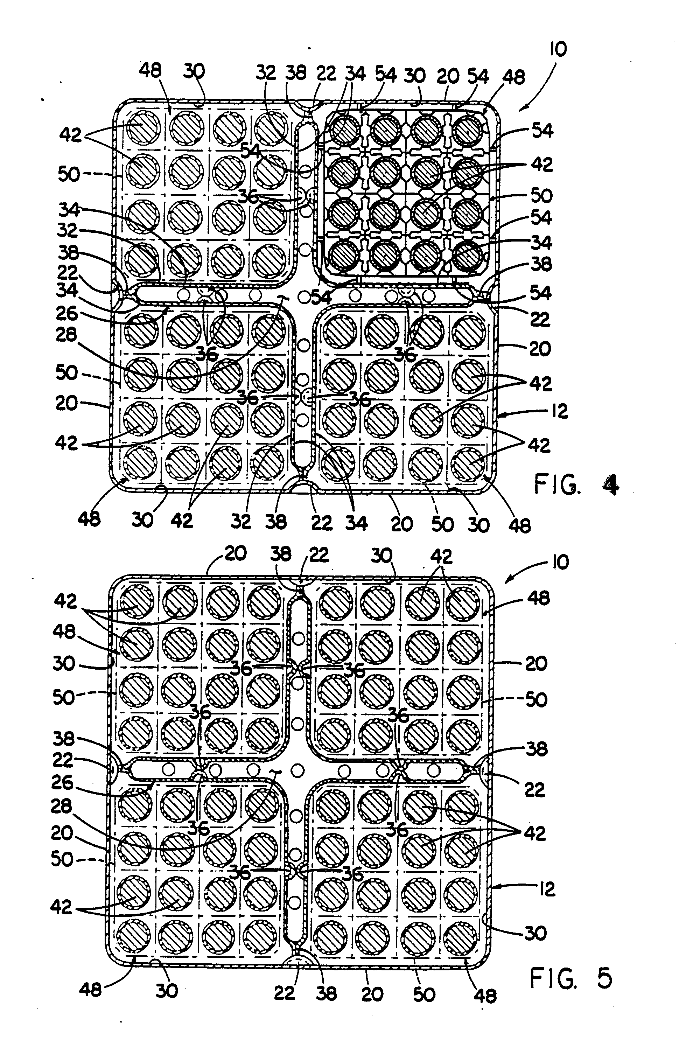

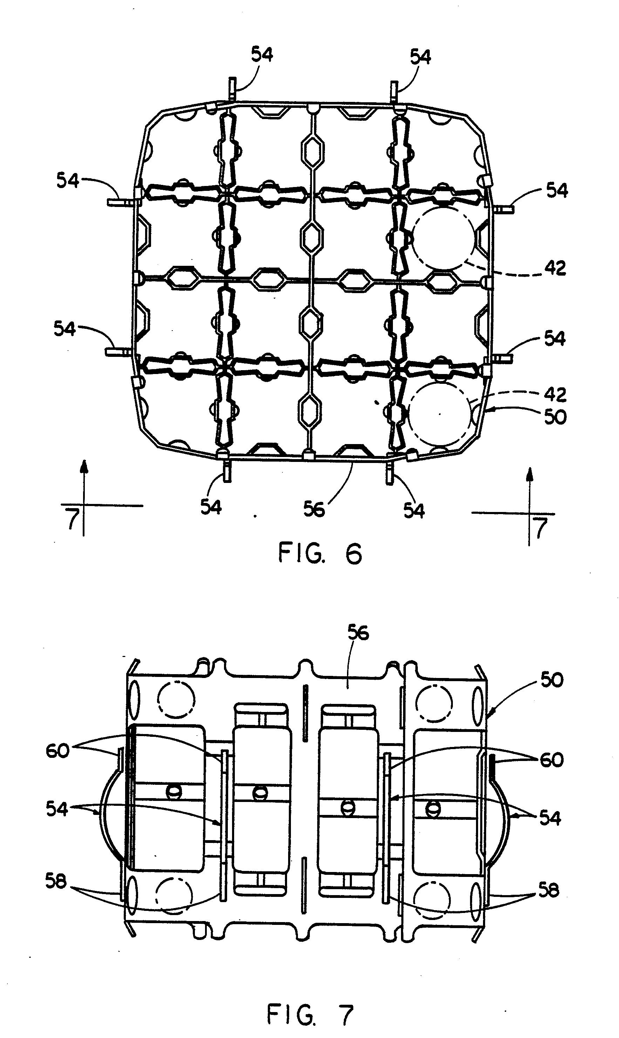

The present invention allows removal of spacer capture tabs used heretofore at least in the limiting CHF ones of the spacers 50 in the axial location (i.e., the uppermost three spacers). This is accomplished through disposing the spacers 50 in desired axial positions along the fuel rods 42 by means of a plurality of sets of yieldably resilient elements in the form of arcuate, elongate leaf springs 54. Some of the leaf springs 54 in each set are disposed between an interior side of the vertical walls 20 of the outer channel 12 and the exterior side of a flat, non-porous outer strap or wall 56 of each of the spacers 50. Others of the leaf springs 54 in each set are disposed between an exterior side of the radial panels 32 of the central water-cross 26 and the exterior sides of the spacers. By way of example, there may be eight leaf springs 54 in a set associated with one spacer 50, as shown in Fig. 6, with two leaf springs 54 disposed along each of the four exterior sides of the outer strap 56 of the generally rectangular spacer. As shown in Fig. 4, two pairs of the springs 54 are disposed between the spacer 50 and the channel walls 20, and the other two pairs of springs are disposed between the spacer 50 and the two radial panels 32 of the water-cross 26 adjacent thereto.

Thus, the springs 54 contact the spacers 50 and either the walls 20 of the channel 12 or the radial panels 32 of the water-cross 26, and they exert thereon sufficient compressive contacting force to maintain the spacers substantially stationary in the desired axial positions along the fuel rods 42. The leaf springs 54 extend generally parallel to the axial direction of the fuel rods 42, and they are spaced from one another in a direction generally transverse to the axial or longitudinal direction of the fuel rods.

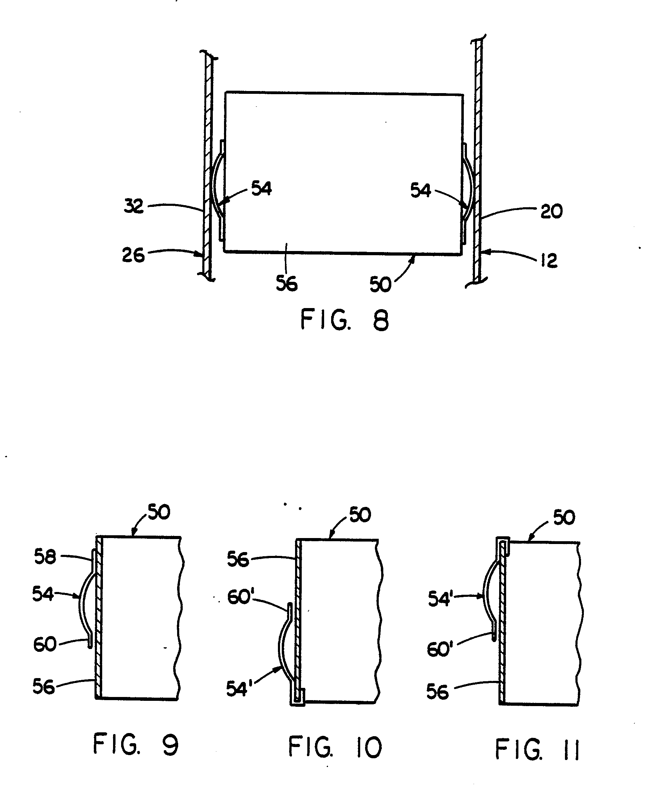

As seen from Figs. 7-11, each spring can be either fixedly attached at one end thereof to the spacer or clipped onto a peripheral edge thereof. In Figs. 7 and 8, the leaf spring 54 is shown as having one end portion 58 thereof affixed, e.g., welded, to the outer strap 56 of the spacer, and having its opposite end 60 free and spaced from the strap 56 so as to provide a small clearance therebetween. In Fig. 9, the leaf spring 54 is the same as in Figs. 7 and· 8, except that its free end 60 is disposed upstream, instead of downstream, from its attached end with regard to the direction of coolant/moderator fluid flow.

In Fig. 10, the spring 54' is shown as detachably clipped onto the lower or upstream peripheral edge of the spacer outer strap 56 and with its free end 60' disposed downstream therefrom, whereas Fig. 11 shows the spring 54' as clipped onto the upper peripheral edge of the strap and with its free end 60' disposed upstream therefrom.

## Claims

1. A nuclear fuel assembly comprising a tubular structure (12, 26) having walls (20, 34) which define an elongate coolant/moderator fluid flow path, and, disposed in the latter and extending axially therein, a bundle of fuel rods (42) including transverse spacer grids (50) spaced from one another along the fuel rods and cooperating with the latter so as to maintain them in substantially parallel spaced relationship with respect to each other, characterized in that at least one of said spacer grids (50) has associated therewith positioning means (54) for disposing the spacer grid in a desired axial position along the fuel rods, said positioning means comprising a plurality of elongate, yieldingly resilient elements (54) interposed between the spacer grid (50) and the walls (20, 34) defining the fluid flow path, each of said elongate, yieldingly resilient elements (54) extending longitudinally in the axial direction of said tubular structure (12, 26) and having an arcuate configuration such as to exert upon the associated spacer grid (50) and said walls (20, 34) a lateral force sufficient to maintain the spacer grid (50) in its desired axial position.

2. A nuclear fuel assembly according to claim 1, characterized in that each of said elongate, yieldingly resilient elements (54) has one end (58) thereof attached to the associated spacer grid (50), and has the opposite end (60) thereof free.

3. A nuclear fuel assembly according to claim 2, characterized in that said free end (60) is biased toward a position spaced laterally outward from the associated spacer grid (50).

4. A nuclear fuel assembly according to claim 2 or 3, characterized in that said one end (58) is fixedly secured to an outer peripheral strap (56) forming part of said associated spacer grid (50).

5. A nuclear fuel assembly according to claim 2 or 3, characterized in that said one end (58') is clipped onto an edge portion of an outer peripheral strap (56) forming part of said associated spacer grid (50).

6. A nuclear fuel assembly according to claim 2, 3, 4 or 5, characterized in that said free end (60) is disposed downstream from said one end (58), having regard to the direction of coolant/moderator fluid flow through said fluid-flow path.

7. A nuclear fuel assembly according to any one of the preceding claims, characterized in that each of said elongate, yieldingly resilient elements (54) is an arcuate leaf spring.

FIG 1

FIG. 2

FIG. 3

FIG. 4

FIG. 5

FIG. 6

FIG. 7

FIG. 8

FIG. 9

FIG. 10

FIG. 11